# EUROPEAN PATENT APPLICATION

(11) **EP 1 841 166 A1**
(43) Date of publication of application: **03.10.2007**
(21) Application number: 06251667.9
(22) Date of filing: 28.03.2006
(51) Int. Cl.: H04L 29/06

(54) **Subject identification**

(71) Applicant: British Telecommunications Public Limited Company, London EC1A 7AJ (GB)
(72) Inventor: The designation of the inventor has not yet been filed
(74) Representative: Cardus, Alan Peter

(57) **Abstract**

A system for authenticating the identity of a subject comprises: means for receiving information on subject behaviour comprising one or more events, means for allocating confidence levels to the event or events comprised in the received behaviour information and for extracting an overall confidence level on the basis of the allocated confidence level or levels and processing means for deciding on the identity of the subject on the basis of the overall confidence level. The system may include a device for collecting information relating to one or more events forming part of the behaviour of a subject and for providing the information to a separate unit to determine the identity of the subject.

## Description

The present invention is concerned with determining the identity of a subject by monitoring the activity of the subject.

Information systems normally require authentication and authorisation before allowing access to the resources they offer. Currently this process is normally achieved by the use of a shared secret e.g. username and password, by use of security tokens, e.g. digital certificates or information carried in intelligent stores such as smart cards and SIMs. Typically, in order for a server to provide a user with resources such as access to a locally stored document, to the Internet or to cash from an ATM dispenser, the server will require the identity of the user to be authenticated. This typically takes the form of the user entering an authentication signal such as a username and password or PIN in response to an authentication challenge from a server, following a request for resources by the user. These authentication signals are often encrypted for additional security. However, it has become burdensome for the user to continually enter their password and user name each time access for some application is required. Furthermore, access to information systems is increasingly being done using mobile devices whose user interfaces are limited, making the authentication process on such devices time consuming and difficult for the user. This problem may be exacerbated where the level of authentication required is increased and the user is asked for more credentials such as date of birth and mother's maiden name.

One solution to this problem is using a location-based authentication mechanism. This relies on the idea that if a mobile device is in a restricted area, e.g. a secure area at a work place, then the device is unlikely to have been stolen and normal authentication requirements can be relaxed. If however the device is away from such a secure location, for example at the user's home, then the usual username and password authentication is required. Such an arrangement is described in International patent application WO04/095857.

There is a need for a system for reducing the authentication burden on users over a greater range of locations. The use of behavioural information can improve authentication techniques by providing an additional validation parameter. This is particularly true of, but not limited to, behaviours involving locations that already require a level of authentication to gain access e.g. at home (metal key or electronic alarm system), in your car (metal key or remote control), departure lounge of an airport (passport and travel ticket).

The above references are given for the purposes of providing background to the present invention and are not to be taken as an indication that the content of the cited prior art documents constitutes common general knowledge.

The present invention provides a method for establishing the identity of a subject including the steps of monitoring the behaviour of the subject; comparing the monitored behaviour with a set of behaviours associated with a known subject; and assessing the identity of the subject on the basis of the comparison.

According to various aspects of the invention, the monitoring step includes monitoring temporal information relating to the monitored behaviour; information on subject behaviour comprises spatial information relating to the subject; the set of behaviours comprises restricted activities for which the subject has authority.

According to further aspects of the invention, the behaviour comprises a sequence of behavioural events, the method including assessing the identity of the subject based on the sequence of behavioural events; the method includes assessing the identity of the subject based on physical travel constraints.

According to further aspects, the invention includes the steps of receiving information on a sequence of events comprising records of events making up user behaviour and information on the timing of each event; assessing the sequence of events to determine if the sequence matches behaviour identifiable with a particular subject.

The present invention also provides a method for validating a request for access to a resource including the steps of monitoring a sequence of behavioural events of a subject; receiving the request and obtaining the location at which the request is made; determining the location of the subject; and assessing the probability that the request was made by the subject.

According to various aspects of the invention, the method includes comparing the monitored sequence of behavioural events with a set of behaviours associated with a known subject; assessing the identity of the subject on the basis of the comparison; allocating a confidence level to the result of one or more of the assessing steps.

The present invention also provides a system for authenticating the identity of a subject comprising: means for receiving information on subject behaviour; a store for storing subject behaviour information; processing means for comparing subject behaviour information received with stored information and for deciding, on the basis of the comparison, on the identity of the subject.

According to various aspects of the invention the system comprises: means for receiving information on subject behaviour comprising one or more events, means for allocating confidence levels to the event or events comprised in the received behaviour information and for extracting an overall confidence level on the basis of the allocated confidence level or levels and processing means for deciding on the identity of the subject the basis of the overall confidence level.

According to further aspects of the invention, the information on subject behaviour comprises temporal information.; the temporal information comprises at least one of position in a sequence of events, relative time, time of day, week, month and year. According to further aspects of the invention information on subject behaviour comprises spatial information relating to the subject; information on subject behaviour comprises attempts by the subject to access restricted resources.

The present invention also provides a device for collecting information relating to one or more events forming part of the behaviour of a subject and for providing the information to a separate unit to determine the identity of the subject.

According to various aspects of the invention the device comprises a store for storing information relating to sequences of events and means for comparing recently collected information with stored sequence information; means for allocating a confidence level according to the result of the comparison; means for providing to the separate unit at least one of the result of the comparison and the confidence level; in which the device is arranged to be transported with the subject.

The present invention also provides a system for providing access to a restricted resource comprising means for receiving subject behaviour information from a device and for processing the information to determine the identity of the subject and means for deciding whether the identified subject is authorised to access the restricted resource.

According to a further aspect of the invention, the system comprises a store for storing subject behaviour information; processing means for comparing subject behaviour information received with stored information and for deciding, on the basis of the comparison, on the identity of the subject.

Various embodiments of the invention, including the best mode known to the inventors, will now be described by way of example only with reference to the drawings in which:

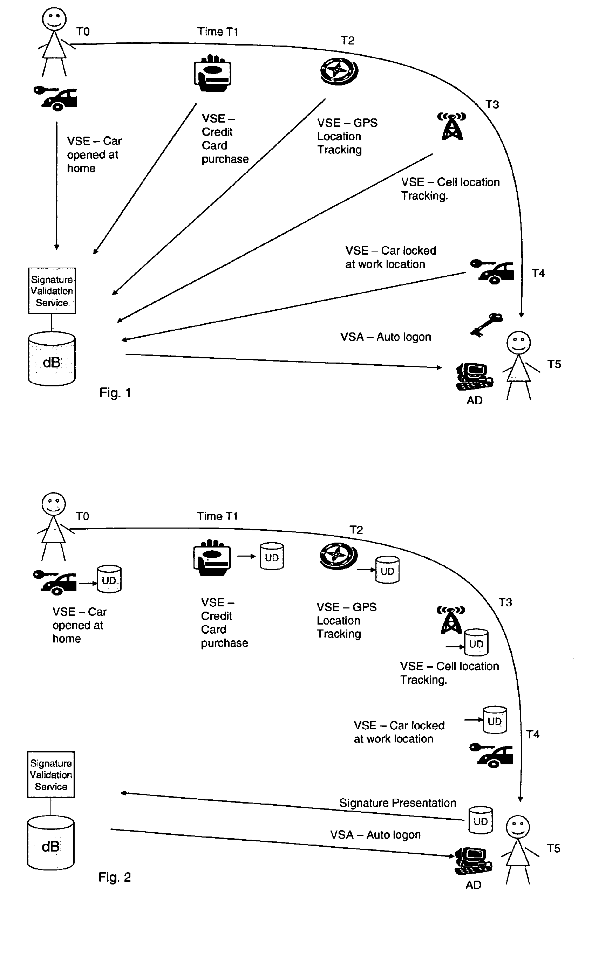

Figures 1 to 3 show schematically systems according to different embodiments of the invention.

### Signatures

Before considering the specific embodiments illustrated in the drawings, we set out examples of signatures, i.e. types of behaviour that are both characteristic of an individual and suitable for monitoring by a security system:
a) A person leaves their work campus at 5pm and drives home. The drive takes around 25 minutes, as usual, and follows a standard route. The person parks and locks their car before unlocking the front door and turning off the alarm system.
b) A person arrives at work and shows their security pass. Two minutes later, they park and lock their car before walking to the office. Three minutes later, they use their proximity card to enter their normal place of work.
c) The reverse of b
d) A person logs into their computer using a username and password.
   One minute later, they start their email client and enter a further username and password.
e) A person visits an ATM machine and withdraws money using their bank card.

Each signature would have a set variance and, providing the variance was not exceeded, the signature would still be valid, e.g. the journey home in a) should take between 20-30 minutes. Alternatively, a signature could have an associated confidence level depending on the degree of matching with the expected behaviour. Behaviour signatures can be linked to provide enhanced security. For example, using behaviour d), above, as a starting point followed by c) and then a) significantly reduces the probability of another person exhibiting, by chance, the same characteristics in the same time period. This linked signature therefore has a higher level of confidence and could be used to log automatically the person on to the home computer rather than requiring use of the normal authentication mechanism.

### Tracking

There are many ways that can be used to track an individual and the present invention does not preclude the use of any mechanism that enables behavioural information to be obtained. Location-related behaviour can be determined, for example, by use of satellite-based tracking, e.g. the global positioning system (GPS); detecting proximity to a BT fixed telephone line or other fixed network terminating equipment. Advantageously, a number of behavioural events may be combined for establishing a signature without the requirement that they necessarily form a continuous behavioural track. Some events provide a high level of confidence in the identification of the user, e.g. use of a proximity card with PIN, whereas others merely track a device being carried by the individual, e.g. using Bluetooth^{™}, without any certainty as to who is carrying the device. The following techniques are examples.

GPS - The use of GPS would allow location tracking and route information to be collected. The information would be forwarded to a central database by an appropriate communications channel e.g. GPRS. GPS works as follows: the system consists of at least 24 satellites in 6 orbital planes. The satellites carry atomic clocks and constantly broadcast the precise time according to their own clock, along with location information. The receiver needs a clock with good short-term stability and the ability to receive signals from four of the satellites in order to determine its own location. The receiver computes the distance to each of the four satellites from the difference between local time and the time the satellite signals were sent. It then decodes the satellites' locations from their radio signals and an internal database and from this can calculate the precise location of the receiver. Location identification using mobile phones is available through network-based or handset-based systems. The use of GPS integrated into mobile phones is already well established. GPS-enabled handset sales in the United States were expected to reach 85 million in 2005. The technology is also taking off globally. In addition, the number of vehicles with integrated GPS is increasing steadily. Other systems use network-based location identification solutions. These include cell of origin, time difference of arrival, angle of arrival and location pattern matching.

It is estimated that more than two-thirds of the world's wireless subscribers have access to GPS and other location identification services. The Dutch company TomTom® (www.tomtom.com) offer a GPS receiver system comprising a memory card with pre-installed maps and software for installation in a mobile device and a wireless GPS receiver that communicates with the mobile using a Bluetooth link.

Cell Location - By monitoring the cell base stations of a mobile network that a user's mobile phone is registered with, a cell-based location can be obtained. This technique is already in widespread use by the mobile phone industry. Databases of cellular masts can allow triangulation to establish the position of a mobile terminal based on the relative strength of different signals detected at the user's handset.

Wi-Fi AP - IEEE 802.11-enabled RFID tags can be attached to assets to allow those assets to be tracked. Similarly, emissions from 802.11 devices (e.g. computing devices and handsets with 802.11 interfaces) can be used to derive the location of these devices. By monitoring which Wi-Fi access points a user is connected to a location can be determined. The access point could be public, operated by an ISP, or one located in the individual's home. Wi-Fi access point could be specifically deployed for the purpose of location tracking. By monitoring the MAC addresses of Wi-Fi clients it would be possible to establish whether a particular client, and hence user, has passed through an area. By way of example, Bluesoft (www.bluesoft-inc.com) provides a wireless LAN real-time location tracking system using time difference of arrival (TDOA). Three or more receivers in Wi-Fi access points measure the arrival times of a radio signal from the device. Triangulation software then uses the measurements to determine a device's location.

Bluetooth® access point (www.bluetooth.com) - This is similar to the Wi-Fi approach although Bluetooth has a much smaller range and hence higher location accuracy. The low cost of Bluetooth would also allow Bluetooth beacons to be placed at entry and exit points of buildings to scan users as they enter and leave the building.

Card Key - Many workplaces use proximity cards or swipe cards in order to gain entry to a building. This is a good indication of a user's location together with a time stamp.

Home Security Systems - Many houses now employ a home security system that is switched on when the property is empty. Personalised PINs are sometime employed to allow multiple people to activate and de-activate the alarm system. Doors are also fitted with magnetic sensors to detect opening and closing and these are monitored by the security system.

Car Security - All cars use a key and, more recently, microprocessor enabled keys have been introduced in order to improve security. These techniques are now being used to identify a particular user and adjust the configuration of the car to suit them. Access to a vehicle by use of an intelligent key can be used as another behavioural trigger.

Credit Cards - Credit card behavioural events are already being used to track fraudulent use. Information on where and when a card has been used can be gathered from networked ATMs and card readers at the point of sale and be used to enhance behavioural signatures.

### Behavioural Signature Database

The invention provides for the collation of many behavioural events and their aggregation to provide a behavioural signature. Any system that allows a signature to be generated may be suitable but a number of examples that are reliable today will now be described with reference to the drawings.

Figure 1 shows the tracking of a sequence of behavioural events some of which are valid signature events (VSE) generated by a subject according to a first embodiment of the invention. In Figure 1, the subject is shown following a timeline (curved arrow) comprising a number of instants T0 to T5. The subject behavioural events along this time line, taken in sequence, are as follows: a car entry at T0, a credit card authentication at time T1, confirmed GPS and cell phone locations at times T2 and T3, respectively, and a car exit at T4. In this embodiment, all behavioural events are required to be stored in central storage system dB. According to this embodiment, a central system incorporating the signature validation service and database dB is supplied by a number of different monitoring entities with which the subject interacts along the time line. The entities encountered by the user are as follows: vehicle security system at T0 and T4, credit card terminal at T1, GPS at T2 and mobile phone cell base station at T3. Each monitoring entity supplies the central system with information on a behavioural event of the subject (i.e. type of event and time of occurrence). This flow of information to the central system is represented in Figure 1 by the arrows from the entities towards central system. Each monitored behavioural event results in an entry in the central storage system dB. The signature validation service is a software entity that analyses these events looking for repeating patterns or signatures, together with calculating variances. As the consistency of these signatures builds, e.g. as measured by a decrease in standard deviation, they can be used for authentication. For example, a single event could not be used to validate; if you had five events with little deviation then these would represent a valid signature and if you had 50 events then one or two standard deviations from the mean would indicate a valid signature. The signature validation service runs on a server processor such as a http web server. The record of subject behaviour accumulated in the central storage dB is used by the SVS to generate, as described below, a valid signature authorisation (VSA) and offer it to the authenticating device AD that requires authentication of the subject's identity, in this case the computer terminal indicated in the Figure by the arrow labelled "VSA Auto logon". The provision of a suitable VSA to the authenticating device AD allows the subject to automatically logon at the computer terminal at T5.

A device that generates an event will have a set of pre-programmed events that it can send to the central system. e.g. "car door opened at 7:00 by Fred". However, it is the ultimate responsibility of the signature validation service to decide whether or not to accept the event. The first time the signature validation service receives an event from, say, a new car it may not rely on the validity of the reported event. However, after a number of reports from a particular source (e.g. the new car) an event would become recognised as valid.

The AD receives the authority to go ahead in a similar way to a conventional method. Taking the example of a door with a card, the user presents their card, it is read, the user identifier on the card is checked in a database and then, if successful, the lock mechanism is instructed to unlock. This may be achieved via the AD. According to a preferred embodiment of the present invention, the UD sends the signature as the user approaches the door, the SVS validates it, and then instructs the lock to unlock. It may be that the SVS actually sends its message to the service that would normally validate the proximity card identifier which then sends the request to the door lock in the normal way. This will be implementation specific depending on the existing authentication system and processes that are in place.

Advantageously in the arrangement of Figure 1, the user may have a lightweight UD or a different user device for different events, e.g. a car key at T0, T4 and a mobile phone at T3..The UD does not require to be very sophisticated as the monitoring entities log the behavioural events direct to the central system. However, this requires that each monitoring entity has both communications capability and a relationship with the central system: requirements that may not be practical in every case. Accordingly, a more sophisticated UD may be chosen to support the communication of events detected by the monitoring devices to the central system. Figure 2 shows an arrangement according to a second embodiment that removes the need for each monitoring entity to meet these requirements.

Figure 2 shows tracking of a sequence of behavioural events some of which are valid signature events by a subject according to an alternative embodiment of the invention Figure 2 shows a user device UD that is able to capture the subject's behavioural events. Advantageously, in the arrangement of Figure 2, it is only the user device UD and the authenticating device AD that require a connection to the central system.

In this embodiment, user device UD carried by the subject logs appropriate events and produces a signature. When the user accesses a secure resource at time T5, they can use their normal authentication mechanism e.g. a proximity card to log on to the secure system and also present to the central system their stored behavioural signature for the last n events, where n is determined by experimental means or by the capability of the user device. At this stage, the SVS is not contributing to the authentication but it's going through a learning phase. The proximity card is still used to authenticate the user in a conventional way, however, the last n user events are presented to the central system so that the SVS learns the signature and associates the signature with a valid logon at the AD. The next time a user does this he presents his card again and the last n events. After perhaps five cycles, the next time the user will be able to present their event history or signature to the central system which then authenticates him to the AD for automatic logon.

The behavioural events could be transferred from the UD to dB using Bluetooth, Wi-Fi, ZigBee, IRDA or other short-range wireless technology. A proxy SVS could be provided at the user location for speed. If the central system is remote from the user, the AP, for example the Bluetooth AP, will be connected to the central system via the internet or other infrastructure. Over a period of time the authentication device would be able to compare signatures and be able to determine whether it is necessary for the user to present the normal authentication mechanism or simply to allow access using the signature. The SVS is still required and does the actual validation, however, the UD needs to present it with a signature for validation. Part of the role of the UD is to decide how many events constitute a signature: does it send, 5, 10 100? By having some intelligence the UD can present what it considers to be a valid signature. If this is accepted by the SVS then the UD learns that this is in fact a valid signature and will note similar signatures in future as being valid and needing to be presented to the SVS. lf the SVS rejects the signature then the UD either responds with a longer signature or leaves the user to use the normal authentication method. According to this embodiment, a mobile device (user device UD) associated with the individual subject is used to compose a signature record, effectively recording the sequence of subject behavioural events. When access to a secure resource is desired, the user device is activated to present this signature information to the central signature validation service for assessment. This assessment is done with reference to the database dB as archive of monitored user behaviour. How many events the UD device stores and for how long will be depend on the degree of security required. If the identity of the subject is confirmed by the central system, it sends a valid signature authorisation (VSA) to permit the subject to log on at the authenticating device AD (e.g. computer terminal) and access the desired resource.

Suitable mobile user devices include a laptop computer or PDA with communications capability or a mobile phone.

### Signature Validation

The signature validation service can improve security by generating a VSA only after validating a suitable signature. Signature validation may consist of one or more of the following:
- confirming that a signature is valid by checking the locations and timings are feasible;
- confirming the events are valid by checking they are signed with an appropriate digital certificate; as part of a Public Key Infrastructure system. (For example, the user device UD sends to the central storage dB a time signal or behavioural event hashed with its private key. Any recipient in possession of the corresponding public key would be able to confirm that this behavioural event was indeed generated by a specific user device. Public keys are available from a number of PKI databases.) and/or
- comparing a signature to previously presented signatures that have been validated. The central system stores signatures over a period of time and compares each newly generated signature with the archive of validated signatures. If a signature match is found then the device would allow authentication to the level that was previously granted for the matching archive signature. If a signature matches many previous archived signatures then a higher level of confidence is achieved.
   In particular, travel timings are derivable from a sequence of locations and associated time information. For example, if a subject is logged accessing an ATM near Ipswich at 1 pm, a subsequent logging of apparently the same subject entering an office building near St. Paul's in London at 1:10 pm will not be accepted. Such an implausible sequence would result in the downgrading of the validity of the signature. A number of positive behavioural events would then be required before the signature became valid once more.

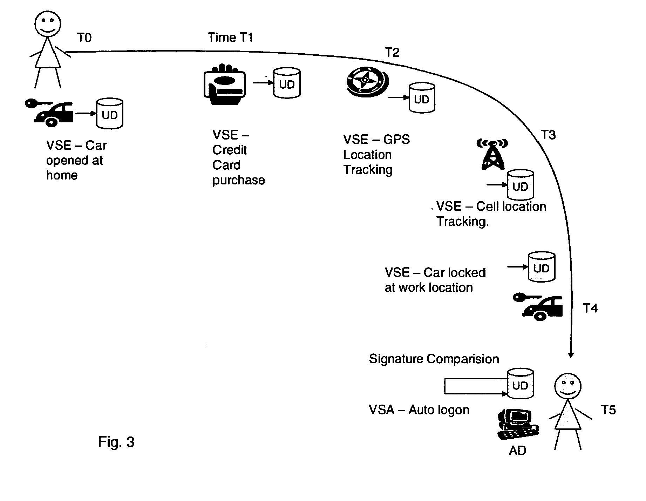

Figure 3 Shows tracking of a sequence of behavioural events or valid signature events (VSE) by a subject according to a further embodiment of the invention. According to this embodiment, the user device UD maintains a record of the sequence of subject behavioural events, as before but, instead of referring to a central server, validates the signature itself. To achieve this, the same kind of logic as embodied in the signature validation service, and described above, may be incorporated into the user device. For example, the user device stores signatures over a period of time and compares each newly generated signature with the archive of validated signatures. If a signature match is found then the device would allow authentication to the level that was previously granted for the matching archive signature. If a signature matches many previous archived signatures then a higher level of confidence is achieved. According to this embodiment, the system operates without any centralised support.

According to a variation on the embodiment of Figure 3, the database of signatures and the SVS reside on the authenticating device AD, e.g. a personal computer. This could be a domestic PC running a small, lightweight database and SVS application. Advantageously, it could be sold as a package at any computer store. The subject installs the application on their PC and a corresponding behavioural event gathering application onto the subject's UD. Each time the subject turns on the PC, it asks for a signature from the UD. Over time, the subject's PC will learn a number of valid signatures so allowing automatic log-on.

### Signature Pattern Analysis

Advantageously, confidence levels of signatures may be achieved according to the invention by signature pattern analysis. Having a strongly authenticated event, e.g. a credit card authorisation, within the signature would give a high confidence level at that instance. As subsequent behavioural events are detected after this event, the confidence level will change depending on the event type and the correlation with previous events. A credit card authentication followed by a car entry with a confirmed GPS location next to the point of sale would tend to increase the confidence level, compared with either event occurring in isolation.

A number of methods can be used to compare and validate signatures generated as part of the present invention. A simple scheme is proposed next by way of example.
A signature is made up events, two examples being shown in the following table. As shown in the table, each event has data associated with it: e.g. location, time, description, event ID. A number of signatures can be compared using a simple alignment scheme.

| Signature 1 | | | | | |
|---|---|---|---|---|---|
| Car Entered | Credit Card Use | Cell Change | Car Vacated | Front Door | Alarm Deact'd |
| Time: 10:05 | Time : 10:19 | Time: 10:25 | Time: 10:35 | Time: 10:37 | Time: 10:37:30 |
| RTime: 0 | RTime : 14 | RTime: 20 | RTime: 30 | RTime: 32 | RTime: 32:30 |
| Loc: | Loc : | Loc: | Loc: | Loc: | Loc: |
| 52n04, 1e10 | 52n04, 1e15 | 52n04, 1e20 | 52n04, 1e25 | 52n04, 1e25 | 52n04, 1e25 |
| EK (KeyNo) | EK (Trans): | EK (CellID): | EK (KeyNo) : | EK (KeyNo.) | EK (AlrmID): |
| :12345 | 654532 | 454545 | 12345 | 22345 | 90345 |

| Signature 2 | | | | | |
|---|---|---|---|---|---|
| Car Entered | No Event | Cell Change | Car Vacated | Front Door | Alarm Deact'd |
| Time: 10:20 | | Time: 10:35 | Time: 10:50 | Time: 10:55 | Time: 10:55:30 |
| RTime:0 | | RTime: 15 | RTime: 30 | RTime: 35 | RTime: 35:30 |
| Loc: | | Loc: | Loc: | Loc: | Loc: |
| 52n04, 1e10 | | 52n04, 1e20 | 52n04, 1e25 | 52n04, 1e25 | 52n04, 1e25 |
| EK (KeyNo) | | EK (CellID): | EK (KeyNo): | EK (KeyNo.) : | EK (AlrmID.): |
| :12345 | | 454545 | 12345 | 22345 | 90345 |

| | | | | | |
|---|---|---|---|---|---|
| **Key:** Time Absolute time RTime Relative Elapsed Time Loc Location of event (lat, long) EK(?) Event Key (this is a unique value associated with the event): KeyNo - The number of a the key used to gain entry Trans - The transaction event event ID of an ATM event. CeIIID - The ID of a cellular base station AIrmID - The ID of the alarm being used. | | | | | |

The two signatures shown are different but the high correlation between the two would make them equally valid. Looked at another way, given signature 1 was a validated, archive signature, then signature 2 would be accepted as valid by comparison with signature 1.

According to further aspects of the invention, the monitored information on subject behaviour includes temporal information relating to the monitored behaviour, including at least one of position in a sequence of events, relative time, time of day, week, month and year and/or spatial information relating to the subject including in comparison with physical travel constraints. According to further aspects of the invention, the monitored information on subject behaviour includes attempts by the subject to access a restricted resource that may include a restricted area or to perform restricted activities for which the subject has authority. According to a further aspect, the spatial information may be derived from a tracking device fitted to the subject.

According to further aspects of the invention, subject behaviour may include a sequence of behavioural events the method including assessing the identity of the subject based on the sequence of behavioural events. The sequence may include attempts by the subject to access restricted resources, the system monitoring successful and failed attempts and rating the subject accordingly. According to further aspects of the invention, successful authentication of the subject may be demonstrated by providing a token to a secure system to inform the secure system of the authenticated identity. The secure system then provides access to the subject to one or more restricted resources in response to receipt of the token.

Those skilled in the art will appreciate that only a limited number of embodiments can be described and that the invention is not intended to be limited to those embodiments described but instead should be accorded the scope defined by the accompanying claims.

The present invention improves on conventional authentication techniques by adding behaviour signatures or behaviour events into the overall authentication process. Each behaviour signature is rated in terms of its security level and a number of signatures can be combined to achieve a higher security rating. By building a history of valid signatures the rating can be increased further. The behaviour signature can be applied to both people and objects.

As will be understood by those skilled in the art, the invention may be implemented in software, any or all of which may be contained on various transmission and/or storage media such as a floppy disc, CD-ROM, or magnetic tape so that the program can be loaded onto one or more general purpose computers or could be downloaded over a computer network using a suitable transmission medium. The computer program product used to implement the invention may be embodied on semiconductor memory or other suitable carrier readable by a computer input device, such as DVD or CD, optically readable marks, magnetic media, punched card or tape or other mechanical storage, or on an electromagnetic or optical signal.

For many applications embodiments of the invention will be implemented on a DSP (Digital Signal Processor), ASIC (Application Specific Integrated Circuit) or FPGA (Field Programmable Gate Array). Thus, the code may comprise conventional programme code or microcode or, for example code for setting up or controlling an ASIC or FPGA. The code may also comprise code for dynamically configuring re-configurable apparatus such as re-programmable logic gate arrays. Similarly, the code may comprise code for a hardware description language such as Verilog^{™} or VHDL (Very high-speed integrated circuit Hardware Description Language) or industry equivalents. As the skilled person will appreciate, the code may be distributed between a plurality of coupled components in communication with one another. Where appropriate, the embodiments may also be implemented using code running on a field-(re)programmable analogue array or similar device in order to configure analogue hardware.

## Claims

1. A method for establishing the identity of a subject including the steps of monitoring the behaviour of the subject;
comparing the monitored behaviour with a set of behaviours associated with a known subject; and
assessing the identity of the subject on the basis of the comparison.

2. A method as claimed in claim 1 in which the monitoring step includes monitoring temporal information relating to the monitored behaviour.

3. A system as claimed in any of claims 1 and 2 in which information on subject behaviour comprises spatial information relating to the subject.

4. A method as claimed in any above claim, in which the set of behaviours comprises restricted activities for which the subject has authority.

5. A method as claimed in claim 4, in which the restricted activities comprise access by the subject to a restricted area.

6. A method as claimed in claim 4 in which the restricted activities comprise access by the subject to a restricted resource.

7. A method as claimed in any above claim in which the behaviour comprises a sequence of behavioural events the method including assessing the identity of the subject based on the sequence of behavioural events.

8. A method as claimed in any above claim including assessing the identity of the subject based on physical travel constraints.

9. A method as claimed in any above claim, in which assessing the identity of the subject includes establishing a confidence level in the identity of the subject.

10. A method as claimed in any above claim including the steps of providing a token to a secure system to inform the secure system of the identity assessed.

11. A method as claimed in claim 10, in which the secure system provides access to the subject to one or more restricted resources in response to receipt of the token.

12. A method as claimed in any above claim including the step of monitoring the behaviour of the subject over time, analysing the monitored behaviour and establishing a set of typical behaviours for the subject.

13. A method as claimed in any above claim in which the subject is an object fitted with a tracking device.

14. A method as claimed in any above claim including the steps of monitoring attempts by the subject to access restricted resources; detecting a new attempt to access a restricted resource; and deciding on the basis of previous monitored attempts, whether the new attempt is made by the subject.

15. A method as claimed in any above claim including the steps of receiving information on a sequence of events comprising records of events making up user behaviour and information on the timing of each event;
assessing the sequence of events to determine if the sequence matches behaviour identifiable with a particular subject.

16. A method as claimed in any above claim, in which the subject behaviour comprises one or more events, the method including the steps of reporting the events to a separate unit for storage and processing.

17. A method as claimed in any of claims 1 to 15 in which the subject behaviour comprises one or more events, the method including the steps of storing information relating to the events on a unit local to the subject and providing the stored information to a separate unit for processing.

18. A method as claimed in any of claims 1 to 15, in which the subject behaviour comprises one or more events, the method including the steps of storing and processing information relating to the events on a unit local to the subject and providing the result of the processing to a separate unit for obtaining access to a restricted resource.

19. A method as claimed in any of claims 6, 11 and 18 and any claims depending from them in which the or each restricted resource comprises one of a secure geographical location, a secure location within a site or building, a secure communications system, a secure data processing system and a secure data storage system.

20. A method as claimed in claim 19 in which the secure data processing system comprises at least one of a computing device, a computer network, a cash machine and an access system.

21. A method for validating a request for access to a resource including the steps of
monitoring a sequence of behavioural events of a subject;
receiving the request and obtaining the location at which the request is made;
determining the location of the subject; and
assessing the probability that the request was made by the subject.

22. A method as claimed in claim 21 including the steps of
comparing the monitored sequence of behavioural events with a set of behaviours associated with a known subject;
assessing the identity of the subject on the basis of the comparison.

23. A method as claimed in any of claims 21 or 22 including the step of allocating a confidence level to the result of one or more of the assessing steps.

24. A system for authenticating the identity of a subject comprising: means for receiving information on subject behaviour; a store for storing subject behaviour information; processing means for comparing subject behaviour information received with stored information and for deciding, on the basis of the comparison, on the identity of the subject.

25. A system for authenticating the identity of a subject, the system comprising: means for receiving information on subject behaviour comprising one or more events, means for allocating confidence levels to the event or events comprised in the received behaviour information and for extracting an overall confidence level on the basis of the allocated confidence level or levels and processing means for deciding on the identity of the subject on the basis of the overall confidence level.

26. A system as claimed in claim 24 or 25 in which information on subject behaviour comprises temporal information.

27. A system as claimed in claim 26 in which the temporal information comprises at least one of position in a sequence of events, relative time, time of day, week, month and year.

28. A system as claimed in any of claims 24 to 27 in which information on subject behaviour comprises spatial information relating to the subject.

29. A system as claimed in any of claims 24 to 28 in which information on subject behaviour comprises attempts by the subject to access restricted resources.

30. A device for collecting information relating to one or more events forming part of the behaviour of a subject and for providing the information to a separate unit to determine the identity of the subject.

31. A device as claimed in claim 30 comprising a store for storing information relating to sequences of events and means for comparing recently collected information with stored sequence information.

32. A device as claimed in claim 31 comprising means for allocating a confidence level according to the result of the comparison

33. A device as claimed claim 31 or 32 comprising means for providing to the separate unit at least one of the result of the comparison and the confidence level.

34. A device as claimed in any of claims 30 to 33 in which the device is arranged to be transported with the subject.

35. A system for providing access to a restricted resource comprising means for receiving subject behaviour information from a device and for processing the information to determine the identity of the subject and means for deciding whether the identified subject is authorised to access the restricted resource.

36. A system as claimed in claim 35 comprising a store for storing subject behaviour information; processing means for comparing subject behaviour information received with stored information and for deciding, on the basis of the comparison, on the identity of the subject.

37. A system as claimed in any of claims 35 and 36 in which the device is the device as claimed in any of claims 30 to 34.

38. A computer program or suite of computer programs for use with one or more computers to perform the method steps as set out in any of claims 1 to 23 or to provide any of the apparatus as set out in any one of claims 24 to 37.

39. A carrier medium carrying a computer program or set of computer programs adapted to carry out, when said program or programs is run on a data-processing system, each of the steps of the method of claims 1 to 23 or to provide apparatus as set out in any one of claims 24 to 37.
